Europäisches Patentamt

European Patent Office

Office européen des brevets

(11) Veröffentlichungsnummer: **0 218 930**
**A1**

# (12) EUROPÄISCHE PATENTANMELDUNG

(21) Anmeldenummer: 86112647.2

(22) Anmeldetag: 12.09.86

(51) Int. Cl.⁴: **F 28 D 7/10**
F 28 F 1/42, F 16 N 39/02

(30) Priorität: 14.09.85 DE 3532930
19.02.86 DE 3605244

(43) Veröffentlichungstag der Anmeldung:
22.04.87 Patentblatt 87/17

(84) Benannte Vertragsstaaten:
AT BE CH DE FR GB IT LI LU NL SE

(71) Anmelder: NORSK HYDRO A/S
Bygdoy Allé 2
N-0257 Oslo 2(NO)

(72) Erfinder: Allgäuer, Hans
Lehrer-Frick-Strasse 19
A-6805 Gisingen(AT)

(72) Erfinder: Kremnitz, Harald
Beim Kreuz Nr. 29
A-6700 Bludenz(AT)

(72) Erfinder: Obersberger, Martin

A-6712 Thüringen Nr. 354(AT)

(74) Vertreter: WILHELMS, KILIAN & PARTNER
Patentanwälte
Eduard-Schmid-Strasse 2
D-8000 München 90(DE)

(54) Kühler.

(57) Der Kühler besteht aus zwei stranggepreßten Profilen mit einem umfangsgeschlossen Außenrohr (1) und einem dazu achsgleich liegenden, umfangsgeschlossenen Innenrohr (7). Das Innenrohr (7) besitzt an seiner Außenseite Rippen (10) und das Außenrohr (1) zumindest an seiner Innenseite nach innen gerichtete Rippen (6). Die in radialer Richtung gemessene Höhe der Rippen (6) und (10) ist etwa gleich der halben Differenz des Innendurchmessers des Außenmantels (2) und des Außendurchmessers des Innenmantels (8). Die Mäntel (2 und 8) des Außenrohres (1) und des Innenrohres (7) sind gewellt, wobei die Wallenberge (3) und die Wellentäler (5) parallel zur Mantelachse verlaufen. An den Rohrenden sind Abschlußkappen angeordnet, über welche das zu kühlende Medium eingeleitet wird und die die Aufgabe haben, den von den beiden Rohren (1 und 7) begrenzten und durch die Rippen (6 und 10) unterteilten Durchflußraum stirnseitig abzudichten.

Fig.3

EP 0 218 930 A1

*1*

## Kühler

Prioritäten: 14. September 1985 - BRD - P 35 32 930.0
19. Februar  1986 - BRD - P 36 05 244.2      P 3091-EP

Die Erfindung bezieht sich auf einen Kühler, beispielsweise einen Ölkühler aus stranggepreßten Profilen mit einem umfangsgeschlossenen Außenmantel und einem dazu achsgleich liegenden umfangsgeschlossenen Innenmantel, wobei der Innenmantel zumindest an seiner Außenseite und der Außenmantel zumindest an seiner Innenseite radial verlaufende, zur Achse der Mäntel parallele Rippen aufweist und die beiden Mäntel korrespondierende Umfangskonturen besitzen.

Ein Kühler dieser Art ist aus der US-Patentschrift 43 45 644 bekannt. Bei diesem Kühler ist der Innenmantel und der Außenmantel als einstückiges Strangpreßprofil ausgebildet, wobei der von den beiden Mänteln begrenzte Ringraum durch radial verlaufende, die Mäntel unmittelbar verbindende Stege in einzelne Kammern unterteilt ist. Die stirnseitig offenen Enden sind mit ringförmigen Kappen verschlossen, welche Ein- bzw. Auslaßöffnungen für das zu kühlende Medium besitzen. Diese Kappen sind am Strangpreßprofil mit mehreren Schrauben befestigt. Ein Strangpreßwerkzeug für ein solches Profil ist kaum herstellbar. Darüberhinaus ist das Verhältnis von Durchströmquerschnitt zur Umfangslänge des Durchströmquerschnittes ungünstig. Dieses Verhältnis bestimmt unter anderem die Kühlleistung. Ein weiterer Faktor, der die Kühlleistung ganz erheblich beeinflußt, ist die Stärke der Mediumschichte zwischen zwei benachbarten Begrenzungsflächen des Kühlers. Wie umfangreiche Versuche zeigten, steigt die Kühlleistung erheblich an, wenn diese Schichte oder Schichtdicke im Bereich der doppelten Reibungs- oder Grenzschichtdicke des zu kühlenden Mediums liegt. Unter Grenzschichte wird hier diejenige Strömungsschichte eines gasförmigen oder flüssigen Mediums entlang einer festen Wand verstanden, die in unmittelbarer Wandnähe liegt und innerhalb der die Geschwindigkeit der Strömung vom Betrag Null asymptotisch auf den Wert der äußeren Strömung ansteigt. Die Grenzschichtdicke ist dabei derjenige Abstand von der Wand, in dem die Strömungsgeschwindigkeit zirka 99 % der Außengeschwindigkeit erreicht hat. Für flüssige und gasförmige Medien sind diese Werte bekannt. Für Luft und Wasser liegt sie zirka bei zwei Millimeter, bei Ölen (Getriebeölen) kann sie Werte bis zu sechs Millimeter erreichen. Für einen efficienten Kühler ist es daher wichtig, daß der Abstand der kühlenden Flächen relativ klein ist. Andererseits ist die Kühlerkonstruktion so zu gestalten, daß der Kühler unter Beibehaltung des erwähnten Kriteriums unterschiedlichen Durchflußmengen anpaßbar ist, ohne daß dadurch die optimale Durchflußgeschwindigkeit des Mediums, die ja ebenfalls als Faktor in die Kühlleistung eingeht, verändert wird.

Die Erfindung geht von einem Kühler der eingangs erwähnten Art aus. Die der Erfindung zugrundeliegende Aufgabe besteht nun darin, die spezifische Kühlleistung eines solchen Kühlers zu verbessern, also das Verhältnis vom Durchströmquerschnitt zur Umfangslänge des Durchströmquerschnittes günstiger zu gestalten und ferner solche konstruktive Voraussetzungen zu schaffen, die die Herstellung und die Montage eines solchen Kühlers vereinfachen. Die Lösung dieser komplexen Aufgabe gelingt erfindungsgemäß nun dadurch, daß die in radialer Richtung gemessene Höhe der Rippen etwa gleich ist der halben Differenz des Innendurchmessers des Außenmantels und des Außendurchmessers des Innenmantels und die vom Innenmantel nach außen ragenden Rippen die von jeweils zwei benachbarten, nach innen ragenden Rippen des Außenmantels begrenzten Teilräume halbieren, wobei die Anzahl der Teilräume gleich ist der Anzahl der nach außen ragenden Rippen des Innenmantels.

Sind nach einem weiteren erfindungsgemäßen Merkmal Außenmantel und Innenmantel zueinander gewellt, so greifen die aufgeweiteten, bzw. gestauchten stirnseitigen Endzonen der Profile bei der Montage zahnartig ineinander, und verhindern dadurch, daß sich beim Verlöten oder Verschweißen der stirnseitigen Trennfuge die Profile gegeneinander verdrehen können. Dadurch ist auf einfache Weise eine Positionierung der zu verbindenden Profilstücke möglich, die gewährleistet, daß die nach außen ragenden Rippen des inneren Mantels positionsgerecht im Teilraum der nach innen ragenden Rippen des Außenmantels liegen und diesen halbieren, so daß über den gesamten Umfang des Kühlers gleiche geometrische Verhältnisse vorhanden sind.

- 3 -

0218930

In der Zeichnung wird die Erfindung anhand zweier Ausführungsbeispiele näher erläutert. Es zeigen:

Fig. 1 einen Querschnitt durch das Außenrohr und

Fig. 2 einen Querschnitt durch das Innenrohr;

Fig. 3 einen Querschnitt durch einen Kühler, der durch ineinanderfügen der beiden Rohre nach den Fig. 1 und 2 gebildet ist (Schnittlinie III-III in Fig. 6);

Fig. 4 ist ein Querschnitt durch die stirnseitige Abschlußkappe;

Fig. 5 eine Ansicht der Abschlußkappe nach Fig. 4 (Blickrichtung Pfeil A) und

Fig. 6 einen Längsschnitt durch einen Kühler im Stirnbereich;

Fig. 7 eine Seitensicht einer zweiten Ausführungsform des Kühlers zum Teil aufgerissen;

Fig. 8 die stirnseitige Ansicht des Kühlers nach Fig. 7 (Blickrichtung Pfeil A);

Fig. 9 einen Querschnitt nach der Linie IX-IX in Fig. 7;

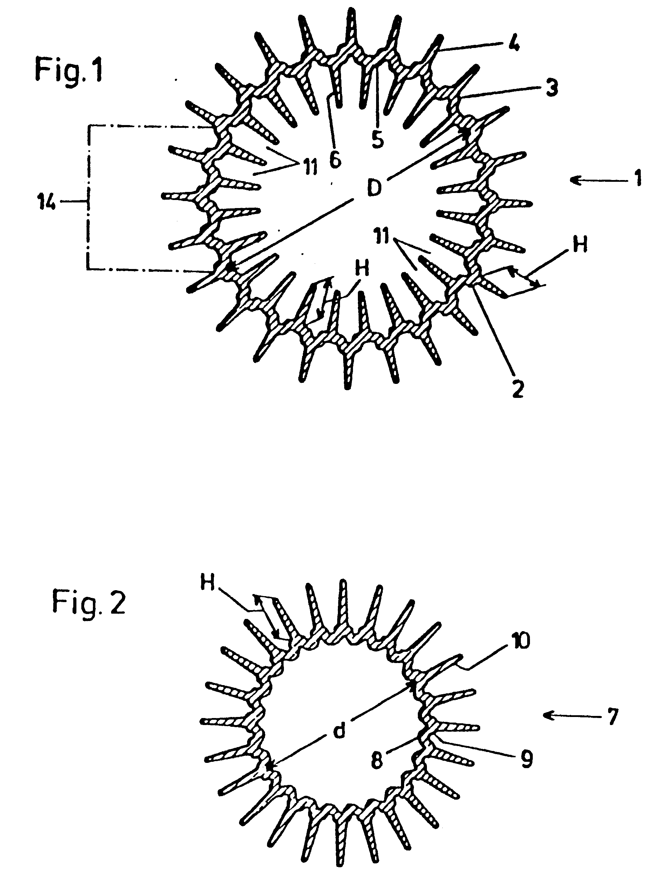

Fig. 1 veranschaulicht den Querschnitt des stranggepreßten Außenrohres 1, dessen eigentlicher Mantel 2 wellenförmig gestaltet ist, wobei an jeden Wellenberg 3 eine äußere Rippe 4 und an jedes Wellental 5 eine innere Rippe 6 anschließt. Die Wellenberge 3 und die Wellenberge 5 erstrecken sich parallel zur Längsachse des Außenrohres 1. Die Wandstärke sowohl des eigentlichen Mantels 2 wie auch jene der Rippen 4 und 6 sind sehr klein. Darüberhinaus sind pro Längeneinheit des Umfanges viele Rippen 4 bzw. 6 vorhanden, die Rippenteilung ist also groß.

Fig. 2 veranschaulicht den Querschnitt des stranggepreßten Innenrohres 7, dessen eigentlicher Mantel 8 ebenfalls wellenförmig gestaltet ist und zwar in korrespondierender Ausgestaltung zum Mantel 2 des Außenrohres 1. An den jeweiligen Wellenbergen 9 schließen nach außen gerichtete Rippen 10 an. Die Teilung der Rippen entspricht jener des Außenmantels 2.

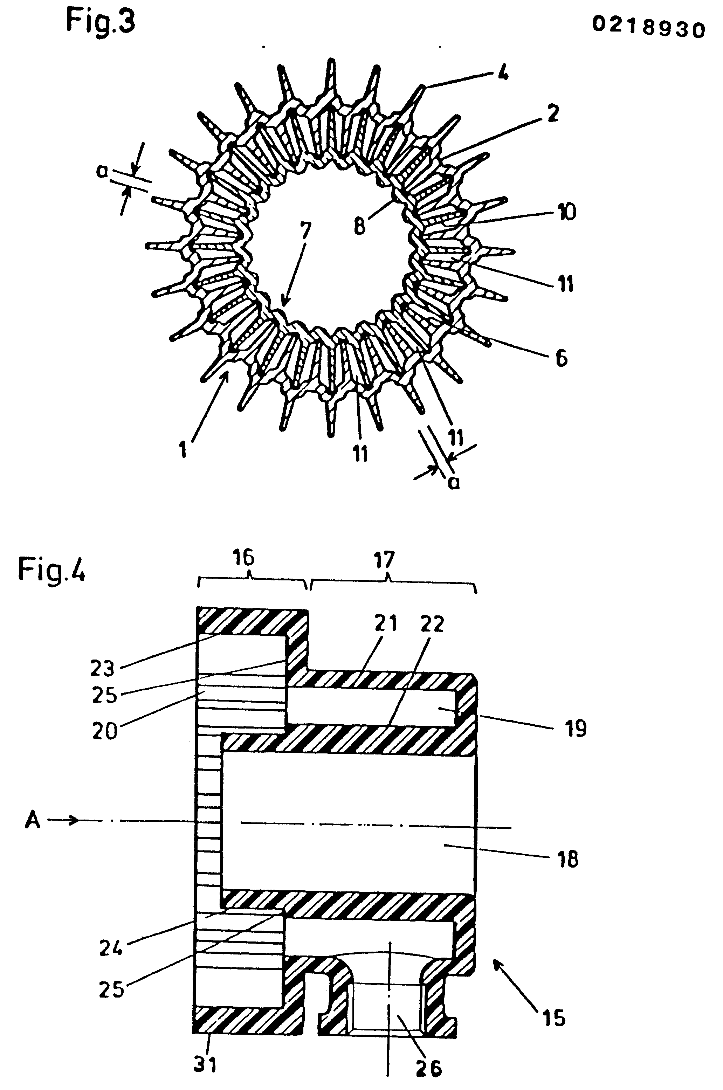

Zur Bildung und Fertigung des Kühlers werden die so ausgestalteten stranggepreßten Rohre 1 und 7 von gleicher Länge ineinander geschoben. Die in radialer Richtung gemessene Höhe H der Rippen 6 bzw. 10 ist etwa gleich der halben Differenz des mittleren Innendurchmessers D des Außenmantels 2 und des mittleren Außendurchmessers d des inneren Mantels 8, so daß sowohl die Rippen 6 wie auch die Rippen 10 den von den beiden ineinander geschobenen Profilen begrenzten Ringraum radial überbrücken (Fig. 3). Die äußeren Begrenzungskanten der Rippen 6 bzw. 10, die den erwähnten Ringraum radial überbrücken, liegen dabei jeweils in einer durch die Wellung der Mäntel 2 bzw. 8 gebildeten rinnenartigen Vertiefung (Wellental), so daß auf Grund der gleichmäßigen Teilung der erwähnte Ringraum in eine Vielzahl gleich großer Kammern unterteilt ist, wobei die vom Innenmantel 8 nach außen ragenden Rippen 10 den von jeweils zwei benachbarten, nach innen ragenden Rippen 6 des Außenmantels 2 begrenzten Teilraum 11 halbieren.

Die Breite dieser Teilräume 11 ist sehr klein, ist doch zu beachten, daß die Fig. 1 und auch die anderen Figuren der Zeichnungen die Bauteile in einem vergrößerten Maßstab veranschaulicher. Tatsächlich sind diese Teile nur halb so groß wie dargestellt.

Die halbierten Teilräume 11 bilden die Durchflußquerschnitte und die sie begrenzenden Wände, hier die Rippen 6 und 10 liegen sehr nahe beieinander, nämlich um den Abstand a voneinander getrennt, gemessen in Umfangsrichtung. Dieser Abstand a entspricht der doppelten Grenzschichtdicke des zu kühlenden Mediums.

Soll der aus Fig. 3 ersichtliche Durchflußquerschnitt unter Beibehaltung des Abstandes a und unter Beibehaltung der äußeren Abmessungen des Kühlers vergrößert werden, so wird ein Innenrohr 7 verwendet mit kleinerem Innendurchmesser, bei gleichzeitiger Vergrößerung der Höhen H der Rippen 6 und 10. Diese Dimensionsänderungen sind natürlich nur in bestimmten Grenzen möglich, denn einerseits kann der Durchmesser d des inneren Rohres 7 nicht beliebig verkleinert werden, andererseits können die Höhen H der Rippen 6 des Außenrohres nicht beliebig erhöht werden.

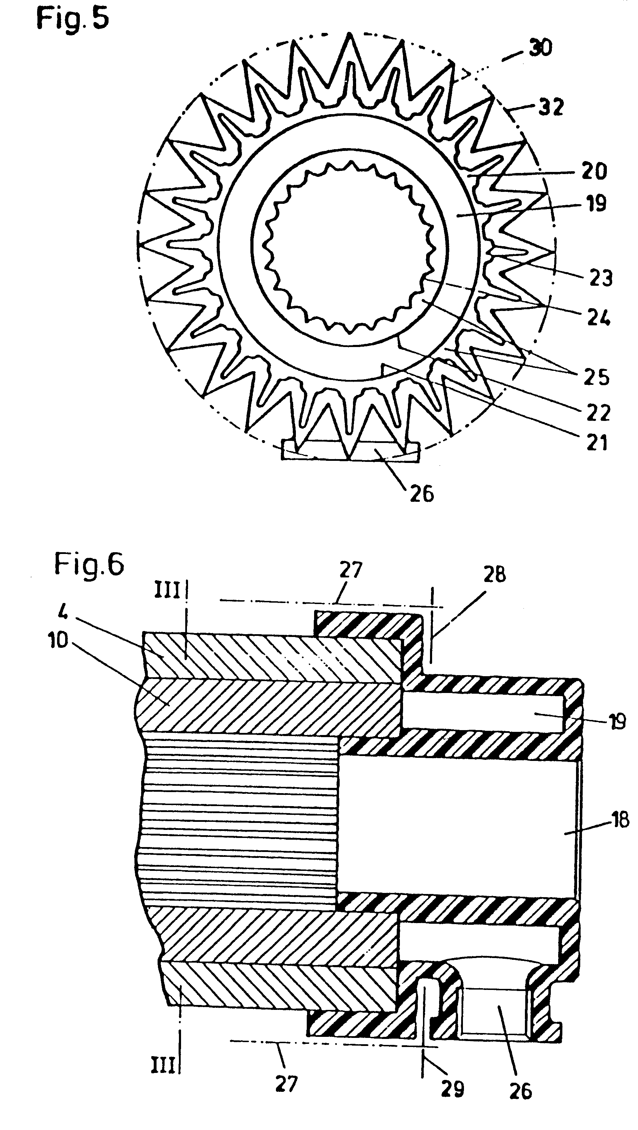

Die zur Bildung des Kühlers ineinander geschobenen Rohre 1 und 7 sind stirnseitig abzuschließen. Zu diesem Zweck dient die Abschlußkappe 15, die in Fig. 4 im Längsschnitt dargestellt ist. Diese Kappe 15 weist in Achsrichtung gesehen zwei Abschnitte 16 und 17 mit unterschiedlichem Durchmesser auf, sowie eine zentrale Durchgangsöffnung 18. Im Abschnitt 17 mit dem kleineren Außendurchmesser ist ein achsial langgestreckter Ringraum 19, der in einen im Abschnitt 16 vorgesehenen, nach außen offenen zweiten Ringraum 20 übergeht. Ist der Ringraum 19 von zylinderischen Wandungen 21 und 22 begrenzt, so sind die Wandungen 23 und 24 des zweiten Ringraumes 20 profiliert und zwar korrespondierend zur Außenprofilierung des Außenrohres 1 und zur Innenprofilierung des Innenrohres 7. Das zeigt die Ansicht der Abschlußkappe 15 nach Fig. 5. Die ineinander übergehenden Ringräume 19 und 20 haben unterschiedliche radiale Erstreckungen und liegen so relativ zueinander, daß im Übergangsbereich zwischen diesen beiden Ringräumen 19 und 20 je eine Schulter 25 gebildet wird. Seitlich an der Abschlußkappe und zwar im Abschnitt 17 ist ein Anschlußstutzen 26 angeformt.

Diese Abschlußkappe 15 wird nun endseitig auf die ineinander gesteckten Rohre 1 und 7 aufgeschoben, wobei die stirnseitigen Randbereiche dieser beiden Rohre 1 und 7 vom Ringraum 20 übergriffen werden (Fig. 6). Die Stirnkanten dieser beiden Rohre 1 und 7 liegen dabei an der erwähnten Schulter 25 an. Im gegenseitig überdeckten Bereich sind die miteinander verbundenen Teile verklebt. Auf Grund der hier gezeigten Profilierung sind diese Klebeflächen sehr groß. Die Abschlußkappe ist zweckmäßigerweise aus einem Kunststoffmaterial gefertigt, das wenigstens in engem Bereich eine gewisse elastische Dehnbarkeit aufweist. Wenn im betriebsmäßigen Einsatz auf den Kühler Druckstöße einwirken, dann kann auf Grund der erwähnten Elastizität des Materials, aus dem die Abschlußkappe 15 gefertigt ist, der Ringraum 20 wenigstens in einem gewissen Umfang die Funktion eines Expansionsraumes ausüben und so die Klebeflächen entlasten. Mit solchen Druckstößen ist zu rechnen, wenn beispielsweise der Kühler im Ölkreislauf eines automatischen Schaltgetriebes eines Kraftfahrzeuges liegt.

An Stelle einer Klebeverbindung zwischen den Rohren 1 und 7 und der Kappe 15 können auch mechanische Verbindungsglieder verwendet werden, beispielsweise mehrere entlang des Umfanges verteilte und zur Achse des Kühlers parallel angeordnete Zugstangen, die in Fig. 6 durch eine strichpunktierte Linie 27 angedeutet sind. An der äußeren Schulter 28 der Abschlußkappe 15 ist dann ein ringförmiges Lagerglied 29 vorgesehen, in Fig. 6 ebenfalls nur angedeutet, mit welchem die Enden der Zugstangen 27 verspannt werden, beispielsweise durch Schrauben.

An Stelle eines mit der Abschlußkappe 15 einstückig gefertigten Anschlußstutzen 26 kann im Abschnitt 17 auch nur eine Bohrung vorgesehen werden, in welche dann ein Anschlußnippel eingesetzt wird.

Zweckmäßigerweise ist die Umfangsfläche des Abschnittes 16 der Abschlußkappe 15 ebenfalls profiliert, und zwar in der Weise, daß durch diese Profilierung zackenartige Stege 30 (Fig. 5) entstehen. Ein Kühler dieser Art kann beispielsweise in ein Rohr eingebaut werden, wobei dann diese Stege 30 zwei Aufgaben erfüllen, nämlich einerseits den Kühler lagerichtig in diesem Rohr zu halten und ferner Durchlaßöffnungen begrenzen in Verbindung mit der Innenseite des den Kühler aufnehmenden Rohres, durch welche das kühlende Medium streichen kann. Ein solches Rohr ist in der Fig. 5 durch die strichpunktierte Linie 32 angedeutet.

Im gezeigten Ausführungsbeispiel sind die umfangsgeschlossenen Außen- und Innenrohre 1 und 7 zylinderisch ausgebildet. Es liegt im Rahmen der Erfindung, auch andere Umfangskonturen, beispielsweise elliptische oder vieleckige zu wählen. In korrespondierender Weise ist dann die Abschlußkappe 15 auszubilden.

Beim gezeigten Ausführungsbeispiel ist ferner die Außenkontur des Außenrohres 1 (Fig. 1) radial symmetrisch ausgebildet. Eine solche Ausgestaltung ist dann zweckmäßig, wenn der Kühler beispielsweise in eine Rohrleitung eingebaut wird. Dies ist der Fall bei Ölkühlern für Kraftfahrzeuge, bei welchen dieser Ölkühler in den Wasserkühler

- 7 -                                                 0218930

integriert wird. Es ist aber auch denkbar und es liegt im Rahmen
der Erfindung, außenseitig am Außenrohr 1 beispielsweise eine Leiste
vorzusehen, die zusammen mit dem Rohr 1 stranggepreßt wird und mit
diesem einstückig ausgebildet ist und die in Fig. 1 mit einer strichpunktierten Linie 14 angedeutet ist. Eine solche Leiste kann der
Befestigung des Kühlers dienen. Ist eine solche Leiste vorgesehen,
die hier durch die strichpunktierte Linie 14 angedeutet ist, so ist
natürlich auch die äußere umfangsseitige Begrenzungswand 23 des
zweiten Ringraumes 20 der Abschlußkappe 15 entsprechend zu gestalten.

Ohne die Erfindung  einzuschränken seien beispielsweise einige
zweckmäßige Abmessungen für einen solchen Kühler angeführt, der
als Ölkühler im Kraftfahrzeugbau verwendet wird:
So beträgt der Außendurchmesser des Außenrohres 1 ca. 40 mm, der
Außendurchmesser des Innenrohres 7 ca. 30 mm. Die mittlere Stärke
s der Rippen 4, 6 und 10 ca. 0,6 mm und die Wandstärke des eigentlichen Mantels 2 bzw. 8 ca. 0,8 mm. Daß ferner das Verhältnis zwischen Durchströmquerschnitt einerseits und Umfangslänge des durchströmten Querschnittes andererseits außerordentlich günstig ist,
macht die Fig. 5 unmittelbar anschaulich. Der mittlere Durchmesser
des Mantels 2 beträgt ferner ca. 32 mm und der mittlere Durchmesser
des inneren Mantels 8 ca. 22 mm.

Beim Ineinanderfügen der Rohre greifen die Wellungen zahnartig ineinander und durch dieses zahnartige Ineinandergreifen sind die
Rohre einwandfrei zueinander positioniert, so daß die nach außen
ragenden Rippen des inneren Mantels positionsgerecht im Teilraum
der nach innen ragenden Rippen des Außenmantels liegen und diesen
halbieren, so daß über den gesamten Umfang des Kühlers gleiche
geometrische Verhältnisse vorhanden sind. Die Breite a der Teilräume 11 werden den jeweils zu kühlenden Medien optimal angepaßt.
So ist es auf Grund der vorgeschlagenen Konstruktion möglich, die
den Kühler bildenden Elemente so zu gestalten, daß die mittlere
Breite a des Teilraumes 11 nur wenige Millimeter beträgt.

Dieser Betrag entspricht dann der doppelten Grenzschichtstärke des
zu kühlenden Mediums, so daß eine optimale Kühlleistung erwartet
werden kann.

Ergänzend sei auch vermerkt, daß die Rippen 4,6 und 10 von ebenen
Flächen und Flächenabschnitten begrenzt sein können, daß es aber
auch möglich ist, die Oberfläche dieser Rippen etwas zu wellen.
Auch sei noch abschließend erwähnt, daß mehrere Ölkühler der hier
beschriebenen Bauweise zu Gruppen und Kombinationen zusammengefaßt
werden können.

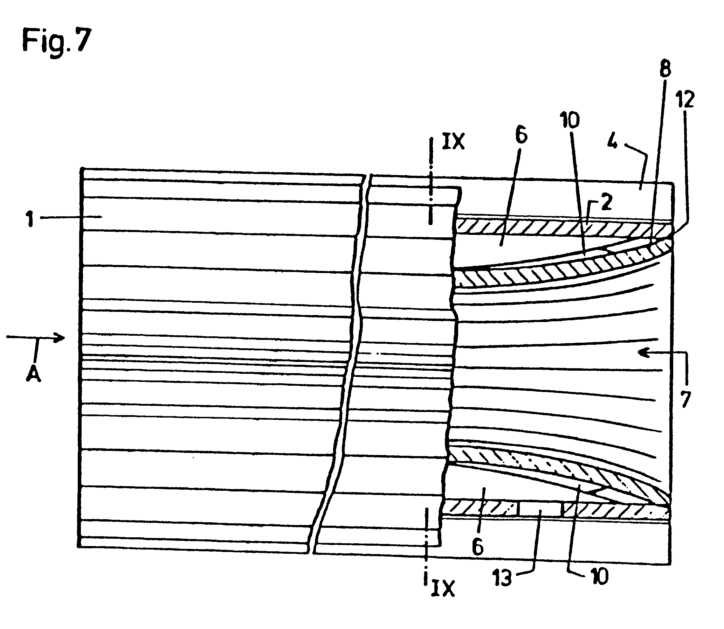

Eine zweite Ausführungsform eines Kühlers mit den oben im Detail beschriebenen Bauelementen nach den Fig. 1 und 2 veranschaulichen
nun die Fig. 7 bis 9. Zur Bildung und Fertigung dieses Kühlers werden
auch hier die so ausgestatteten stranggepreßten Rohre 1 und 2 von
etwa gleicher Länge ineinander geschoben. Bevor jedoch die stranggepreßten Rohre 1 und 2 ineinandergeschoben werden, werden an den
Endabschnitten des Innenrohres 7 die nach außen ragenden Rippen 10
abgetrennt, ebenso werden abgetrennt die nach innen ragenden Rippen 6
des Außenrohres 1. Dann wird das Innenrohr 7 in diesen Endbereichen
kegel- oder trompetenartig aufgeweitet und zwar so weit, bis sein
aufgeweiteter äußerer Rand an der Innenseite des Außenmantels 2
anliegt (Fig. 7). Trotz des relativ dünnwandigen Mantels 8 ist diese
Aufweitung dank der Ausgestaltung des Profiles möglich, da durch
die erwähnte Wellung sozusagen Materialreserven gebildet werden,
die nun bei dieser Aufweitung, die ja eine nicht unerhebliche
Vergrößerung des Umfanges bedeutet, herangezogen werden können.
Entlang der Stoßfuge oder Trennfuge 12 werden dann die ineinandergeschobenen Rohre 1 und 7 verschweißt oder verlötet oder verklebt.

Es ist auch möglich, statt das Innenrohr 7 aufzuweiten, das Außenrohr 1
zu stauchen, wobei auch in diesem Falle im Endbereich die Rippen 6 bzw.
10 abgetrennt werden müssen. Auch für eine kontrollierte Stauchung
bewährt sich eine solche Wellung des Mantels 2 des Außenrohres 1.

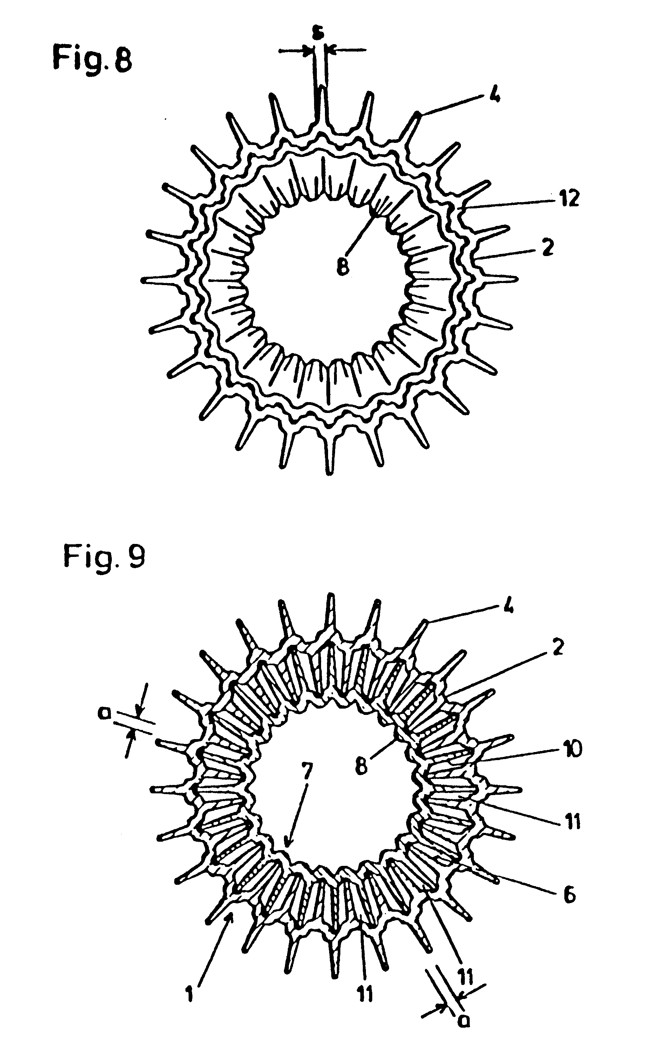

Die Stirnseite des für die Schweißung oder Lötung vorbereiteten Kühlers veranschaulicht Fig. 8, aus der auch die erwähnte trompetenartige Aufweitung des eigentlichen Mantels 8 des Innenrohres 7 ersichtlich ist. Nahe den Endbereichen werden im äußeren Mantel 2 Ein- bzw. Auslaßöffnungen 13 vorgesehen, an welchen durch geeignete und bekannte Mittel Rohrleitungen bzw. Schlauchleitungen anschließbar sind.

Im gezeigten Ausführungsbeispiel sind die umfangsgeschlossenen Außen- und Innenrohre 1 und 7 zylindrisch ausgebildet. Es liegt im Rahmen der Erfindung, auch andere Umfangskonturen, beispielsweise elliptische oder vielkantige zu wählen.

Werden dem Ausführungsbeispiel nach den Fig. 7 bis 9 jene Abmessungen zugrunde gelegt, die im Zusammenhang mit dem erstbesprochenen Ausführungsbeispiel oben erläutert worden sind, so ist erkennbar, in welchem extremen Ausmaß stirnseitig der Innenmantel 8 aufgeweitet wird. Werden die oben angegebenen Maße berücksichtigt, so ergibt sich unter Berücksichtigung, daß die Umfangsdifferenz auf Grund der Aufweitung $\Delta u = \pi (D - d)$ ist, ein Wert von ca. 30 mm. Auf den ursprünglichen Umfang bezogen ergibt dies eine Streckung von ca. 45 %. Dank der besonderen Ausgestaltung des Mantels 2 bzw. des Mantels 8 ist eine Streckung in diesem extremen Ausmaß möglich geworden.

Stirnseitig werden Innenmantel bzw. Außenmantel so weit aufgeweitet bzw. gestaucht, daß die Wellung als solche zwar erhalten bleibt, jedoch gegenüber ihrer ursprünglichen Form gestreckt bzw. gestaucht ist. Beim Ineinanderfügen der Rohre greifen dann die Wellungen zahnartig ineinander und durch dieses zahnartige Ineinandergreifen sind die Rohre einwandfrei zueinander positioniert, so daß die nach außen ragenden Rippen des inneren Mantels positionsgerecht im Teilraum der nach innen ragenden Rippen des Außenmantels liegen und diesen halbieren, so daß über den gesamten Umfang des Kühlers gleiche geometrische Verhältnisse vorhanden sind. Die Breite b der Teilräume 11 werden den jeweils zu kühlenden Medien optimal angepaßt. So ist es auf Grund der vorgeschlagenen Konstruktion möglich, die den Kühler bildenden Elemente so zu gestalten, daß die mittlere Breite b des Teilraumes 11 nur ca. 0,2 mm beträgt, was eine optimale Kühlleistung ermöglicht.

Im gezeigten Ausführungsbeispiel nach Fig. 7 ist die Einlaß- bzw. Auslaßöffnung 13 für das zu kühlende Medium im äußeren Mantel 2 vorgesehen. Es liegt im Rahmen der Erfindung, diese Öffnungen auch im Innenmantel anzuordnen oder aber im Innen- und Außenmantel.

Was darüberhinaus vorstehend in allgemeiner Form vom erstbesprochenen Ausführungsbeispiel gesagt worden ist, gilt sinngemäß auch für das zweitbesprochene Ausführungsbeispiel.

Patentansprüche:

1

1. Kühler, beispielsweise Ölkühler aus stranggepreßten Profilen mit einem umfangsgeschlossenen Außenmantel (1) und einem dazu achsgleich liegenden umfangsgeschlossenen Innenmantel (7), wobei der Innenmantel (7) zumindest an seiner Außenseite und der Außenmantel (1) zumindest an seiner Innenseite radial verlaufende, zur Achse der Mäntel parallele Rippen (6,10) aufweist und die beiden Mäntel korrespondierende Umfangskonturen besitzen, dadurch gekennzeichnet, daß die in radialer Richtung gemessene Höhe (H) der Rippen (6,10) etwa gleich ist der halben Differenz des Innendurchmessers (D) des Außenmantels (2) und des Außendurchmessers (d) des Innenmantels (8) und die vom Innenmantel (8) nach außen ragenden Rippen (10) die von jeweils zwei benachbarten, nach innen ragenden Rippen (6) des Außenmantels (2) begrenzten Teilräume (11) halbieren, wobei die Anzahl der Teilräume (11) gleich ist der Anzahl der nach außen ragenden Rippen (10) des Innenmantels (2).

2. Kühler nach Anspruch 1, dadurch gekennzeichnet, daß zumindest einer der Mäntel (2,8) gewellt ist, wobei die Wellenberge (3) und Wellentäler (5) parallel zur Mantelachse verlaufen.

3. Kühler nach Anspruch 1, dadurch gekennzeichnet, daß Außenmantel (2) und Innenmantel (8) korrespondierend zueinander gewellt sind.

4. Kühler nach Anspruch 1, dadurch gekennzeichnet, daß die mittlere Stärke der Rippen (6,10) kleiner ist als die Wandstärke der Mäntel (2,8).

5. Kühler nach einem der Ansprüche 1 bis 4, dadurch gekennzeichnet, daß der von den beiden Mänteln (2,8) begrenzte Ringraum von den Rippen (6) bzw. (10) radial durchsetzt ist und die freien Enden oder Kanten der Rippen (6,10) jeweils in durch die Wellung gebildeten Vertiefungen desjenigen Mantels ragen, gegen den sie sich erstrecken.

6. Kühler nach einem der Ansprüche 1 bis 5, dadurch gekennzeichnet, daß zum stirnseitigen Abschluß der achsgleich liegenden Rohre (1,7) in an sich bekannter Weise eine zentrale Öffnung (18) aufweisende Abschlußkappe (15) vorgesehen ist mit einem die Teilräume (11) verbindenden Ringraum (19), an welchem sich ein weiterer einseitig offener Ringraum (20) anschließt, dessen umfangsseitige äußere Begrenzungswand (23) korrespondierend zur Außenkontur des Außenrohres (1) und dessen umfangsseitig innere Begrenzungswand (24) korrespondierend zur Innenkontur des Innenrohres (7) ausgebildet ist und dieser Ringraum (20) die beiden Rohre (1,7) randseitig übergreift und mit diesen verbunden vorzugsweise verklebt ist.

7. Kühler nach Anspruch 6, dadurch gekennzeichnet, daß die achsiale Erstreckung des die Teilräume (11) verbindenden inneren Ringraumes (19) größer ist als seine radiale Erstreckung.

8. Kühler nach Anspruch 6 oder 7, dadurch gekennzeichnet, daß mit dem inneren Ringraum (19) ein Anschlußnippel verbunden ist oder der Ringraum (19) einen seitlich angeformten Anschlußstutzen (26) aufweist.

9. Kühler nach einem der Ansprüche 6 bis 8, dadurch gekennzeichnet, daß die Abschlußkappe (15) aus Kunststoffmaterial gefertigt ist, oder aus Metall, insbesondere Aluminium.

10. Kühler nach Anspruch 6, dadurch gekennzeichnet, daß der Bereich (16) der Abschlußkappe (15), der den nach außen offenen Ringraum (20) aufweist, einen größeren Außendurchmesser besitzt als der Bereich (17) mit dem inneren Ringraum (19).

11. Kühler nach Anspruch 10, dadurch gekennzeichnet, daß die Abschlußkappe (15) an ihrem Umfang, vorzugsweise in dem den größeren Durchmesser aufweisenden Abschnitt (16) radial nach außen gerichtete Stege (30) aufweist.

12. Kühler nach einem der Ansprüche 6 bis 11, dadurch gekennzeichnet, daß die beiden Ringräume (19 und 20) der Abschlußkappe (15) über eine äußere und eine innere Schulter (25) ineinander übergehen und diese Schultern (25) bei funktionsgerechtem Einbau der Abschlußkappe (15) einen Anschlag für die Stirnkanten der Rohre (1 und 7) bilden (Fig. 6).

13. Kühler, nach einem der Ansprüche 1 bis 5, dadurch gekennzeichnet, daß in den Endabschnitten die Innenrippen (6) des Außenmantels (2) und die Außenrippen (10) des Innenmantels (8) abgetrennt sind, und stirnseitig der Innenmantel so weit aufgeweitet und/oder der Außenmantel so weit gestaucht ist, daß sich die Mäntel stirnseitig berühren und die beiden Mäntel stirnseitig miteinander verbunden (verschweißt, verlötet, verklebt) sind.

14. Kühler nach Anspruch 13, dadurch gekennzeichnet, daß durch die Aufweitung bzw. Stauchung der Endabschnitte des Innenmantels und/oder des Außenmantels die Wellung als solche erhalten, jedoch gestreckt bzw. gestaucht ist und die Wellungen der ineinandergefügten Mäntel zahnartig ineinandergreifen.

15. Kühler nach einem der Ansprüche 1 bis 5, dadurch gekennzeichnet, daß die mittlere Breite (b) eines von zwei benachbarten Rippen (6,10) begrenzten Teilraumes (11) ca. 0,2 mm beträgt (Fig. 5).

P. 3091-EP

0218930

Fig.1

Fig.2

**Fig.3**

0218930

**Fig.4**

## Fig.5

## Fig.6

# Fig.7

# Fig. 8

# Fig. 9

**Europäisches Patentamt**

**EUROPÄISCHER RECHERCHENBERICHT**

**0218930**
Nummer der Anmeldung

EP    86 11 2647

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | PATENTS ABSTRACTS OF JAPAN, Band 7, Nr. 20 (M-188)[1165], 26. Januar 1983; & JP-A-57 175 887 (TOKYO SHIBAURA DENKI K.K.) 28-10-1982 | 1 | F 28 D    7/10 <br> F 28 F    1/42 <br> F 16 N   39/02 |
| | --- | | |
| Y | FR-A-1 274 618  (LEGRAND) <br> * Seite 1, Spalte 1, Zeilen 31-34; Seite 2, Spalte 2, Zeilen 1-17; Seite 3, Spalte 1, Zeilen 11-30; Figuren 1,2,4,6 * | 2,5 | |
| | --- | | |
| Y | FR-A-1 377 458  (BROWN et al.) <br> * Figur 10 * | 4 | |
| | --- | | |
| Y | FR-A-2 306 421  (SA FRANCAISE DE FERODO) <br> * Seite 4, Zeilen 28,29; Figur 4 * | 13 | **RECHERCHIERTE SACHGEBIETE (Int Cl 4)** |
| | --- | | F 28 D <br> F 28 F |
| A | GB-A-2 085 574  (SÜDDEUTSCHE KÜHLERFABRIK) <br> * Zusammenfassung; Figuren 1,2 * | 6-8,12 | F 16 N <br> F 01 P |
| | --- | | |
| A | US-A-2 960 114  (HINDE) | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 15-12-1986 | HOERNELL, L.H. |